# EUROPEAN PATENT APPLICATION

(11) **EP 1 063 392 A2**
(43) Date of publication of application: **27.12.2000**
(21) Application number: 00305182.8
(22) Date of filing: 19.06.2000
(51) Int. Cl.: F01L 1/34, F01L 13/00

(54) **Automotive internal combustion engine.**

(30) Priority: 25.06.1999 US 344986
(71) Applicant: Ford Global Technologies, Inc., Dearborn, Michigan 48126 (US)
(72) Inventor: Diggs, Matthew Byrne, Farmington, Michigan 48335 (US); Cierpial, Philip Damian, Detroit, Michigan 48224 (US); Chou, Tachih, Ann Arborn, Michigan 48105 (US)
(74) Representative: Messulam, Alec Moses

(57) **Abstract**

A multicylinder, reciprocating internal combustion engine includes a controller (20) for operating a valve actuation system (24) so as to define at least three states of engine operation characterised by a first state in which at least some of the engine's cylinder valves (28) are disabled and other cylinder valves are operated at a lesser overlap condition, with a second state being characterised by disablement of least some of the cylinder valves, with other of the cylinder valves being operated with a greater overlap condition, and a third state in which none of the cylinder valves are disabled and all the valves are operated with a greater overlap.

## Description

The present invention relates to reciprocating internal combustion engines which may be operated with fewer than their total number of cylinders when conditions permit- e.g., when less than maximum power output is demanded, with additional operational adjustments being provided by valve gear having the capability for greater or lesser valve lift and overlap.

U.S. Patent 5,490,486 discloses a variable displacement engine in which the engine may be operated with fewer than the total number of cylinders by selectively disabling both the intake and exhaust valves in certain cylinders. In the '486 patent, the valve events are described as being only fully functional or disabled; there is no capability to vary between lower lift and higher lift in combination with the variable displacement feature. As used herein, the term "variable displacement" refers to the practice of cutting out or deactivating at least one, but less than the complete complement of an engine cylinders.

Although it is known to combine variable displacement with high and low lift valves, prior attempts have suffered from at least several deficiencies. For example, it is known to operate with: 1) deactivated cylinders and low valve lift for the activated cylinders at low loads; 2) all of the cylinders and low lift at medium loads; and 3) all the cylinders and high lift and high loads. Unfortunately, utilising all the cylinders and low lift at medium loads will have the undesirable effect of producing more oxides of nitrogen (NOx) because low lift will not allow internal exhaust gas recirculation (EGR), and as a result, the NOx produced by the engine will increase.

According to the present invention, a multicylinder reciprocating internal combustion engine includes a plurality of cylinders, each having at least one intake valve, at least one exhaust valve, and a piston connected to a common crankshaft. A valve actuation system for operating the intake and exhaust valves includes the capability of selectively disabling some of the valves and operating other of the valves with either lesser overlap or greater overlap. In this manner, the engine may be operated with a variable displacement and with variable overlap.

A plurality of sensors determines the values of a plurality of engine operating parameters, and these operating parameter values are used by a controller for operating the valve actuation system. The controller operates the valve actuation system so as to define at least three stages of engine operation characterised by a first state in which at least some of the valves are disabled and other valves are operated at a lesser overlap, and a second state in which at least some of the valves are disabled and other valves are operated with a greater overlap. Finally, a third state is characterised by all of the valves being operated, in other words, none being disabled, with all of the valves being operated at a greater overlap.

In a preferred embodiment, the valve actuation system comprises a camshaft powered by the engine and timed with respect to the crankshaft by means of a camshaft phaser operated by the controller. The camshaft phaser preferably times the camshaft so that its timing is retarded at medium engine load and speed and advanced to higher engine speed. Alternatively, the valve actuation system may comprise intake and exhaust camshafts powered by the engine and timed with respect to the crankshaft, with the timing of the exhaust camshaft with respect to the crankshaft being set by a camshaft phaser operated by the controller. As before, the camshaft phaser is operated by the controller such that the timing of the exhaust camshaft is retarded at medium engine load and speed and advanced at higher engine speed.

According to another aspect of the present invention, a method of operating a crankshaft-equipped reciprocating variable displacement engine having a camshaft valve drive and camshaft switching capability for at least some of the cylinders, comprises the steps of sensing a plurality of engine operating parameters, operating the engine with at least some of the cylinders disabled at idle speed and load, with others of the cylinders being operated with lesser valve overlap at idle speed and load, and operating the engine with at least some of the cylinders disabled at medium speed and load, with others of the cylinders being operated with greater overlap at medium speed and load. Finally, the method also includes the operation of the engine with none of the cylinders disabled at higher speed and load, and with all the cylinders being operated with greater valve overlap at higher speed and load.

This method may also include the further step of retarding camshaft timing in the event the engine is operated at medium engine load and speed.

A system embodying the present invention combines cylinder deactivation with low valve overlap at low engine speeds and loads, while applying cylinder deactivation with standard or higher valve overlap at medium speed and load for the best fuel economy and emission control. Operation with all cylinders and higher overlap at high loads allows the highest power output. This may be further combined with variable cam timing to allow superior control of NOx when operating at medium speed and load with deactivated cylinders and higher overlap. Variable cam timing may include operating slightly retarded cam timing at low speed and high power output situations.

It is an advantage of the present invention that by combining the use of variable displacement and higher overlap at medium speeds and loads along with variable cam timing will allow superior fuel economy characteristics of the engine as well as superior emission control, particularly (NOx).

It is a further advantage of the present invention that an engine according to the present invention will have superior noise, vibration, and harshness characteristics because the cam switching capability from lower to higher overlap will allow superior idle operation to be combined with smooth operation at medium and higher engine speed and load.

The present invention will now be described further, by way of example, with reference to the accompanying drawings, in which:
Figure 1 is a schematic representation of an engine cylinder layout according to the present invention;
Figure 2 is a block diagram of an engine and controller according to the present invention;
Figure 3 is a flow chart of a control algorithm according to the present invention; and
Figure 4 is a valve lift diagram illustrating one aspect of the present invention.

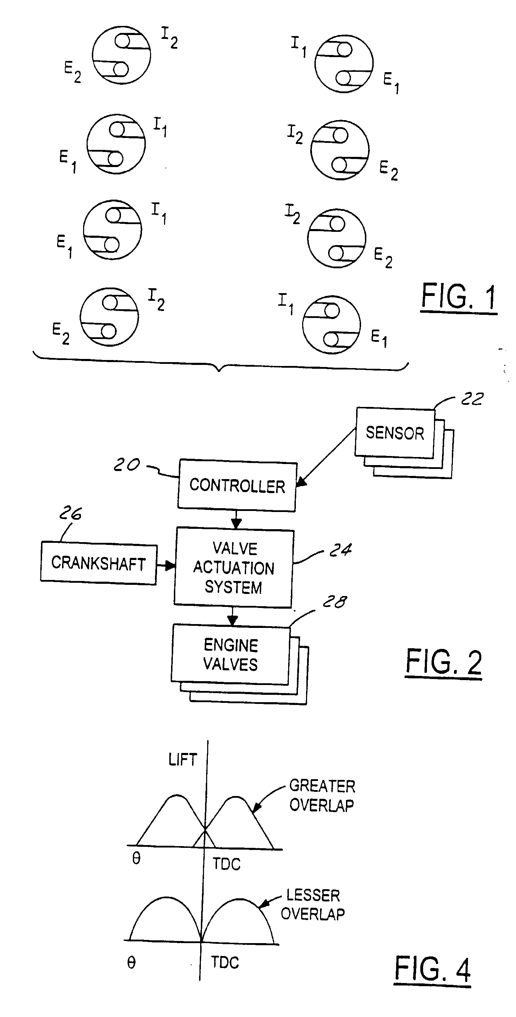

As shown in Figure 1, an eight cylinder engine has a single intake and exhaust valve per cylinder. However, those skilled in the art will appreciate in view of this disclosure that a system and method according to the present invention could be employed with other types of engines having other numbers of cylinders and , cylinder bank arrangements, and other valve arrangements, such as three, four, five valves or other numbers of intake and exhaust valves.

The engine in Figure 1 is shown as having intake valves I₁ and I₂ and exhaust valves E₁ and E₂. All of the valves I₁ are intended to be operated in the same manner. Similarly, the valves labelled I₂ are to be operated in the same manner. In other words, valves labelled I₁ are all operated as one group and valves labelled I₂ are operated as another group. The same is true with respect to valves labelled E₁ and E₂. According to the present invention, when the engine is operated according to variable displacement, valves I₁ and E₁ would be deactivated, thereby cutting off cylinders equipped with valves I₁ and E₁. This would enable operation with four cylinders. Conversely, valves I₂ and E₂ would remain in operation either at low overlap or high overlap.

The low and high overlap situations are shown in Figure 4. As used herein, the term "overlap" means a point at which both the intake and exhaust valves of a particular cylinder are open.

In the upper part of Figure 4, which is the greater overlap section, the valve events are close together such that an overlap period occurs about top dead centre (TDC) of the crankshaft at the end of the exhaust stroke. Conversely, in the lesser overlap situation, shown in Figure 4, there is, as the name implies, little or no overlap about the top dead centre position of the crankshaft. The lesser overlap, although producing less power and also potentially higher NOx emissions due to lack of internal EGR within the cylinder, provides superior idle characteristics for an engine and is therefore desirable from that standpoint.

The valve operation curves shown in the greater overlap segment of Figure 4 produce higher power, while allowing enhanced NOx control occasioned by the reversion of exhaust gas or retention of exhaust gas as internal EGR.

The greater and lesser overlap illustrated in Figure 4 may be produced by cam switching which is illustrated, for example, in U.S. Patent 5,515,820, which is hereby incorporated by reference in this specification.

As shown in Figure 2, controller 20 receives input from a plurality of sensors 22. Sensors 22 may include, for example, a throttle position sensor, an engine charge temperature sensor, a fuel pressure sensor, an engine torque output sensor, and other types of sensors known to those skilled in the art and suggested by this disclosure. Controller 20 is of the conventional engine processor type known to those skilled in the art and suggested by this disclosure. Controller 20 operates valve actuation system 24 which may comprise a camshaft, for example, driven by the engine and timed with respect to crankshaft 26 by means of the camshaft phaser operated by the controller. The camshaft phaser comprises any one of a variety of devices known to those skilled in the art for positioning a camshaft with respect to the crankshaft of an engine. Such devices are commonly known.

In any event, valve actuation system 24 powers engine valves 28 while also allowing disablement of the valves as shown in the '486 patent, which is hereby incorporated by reference in this specification.

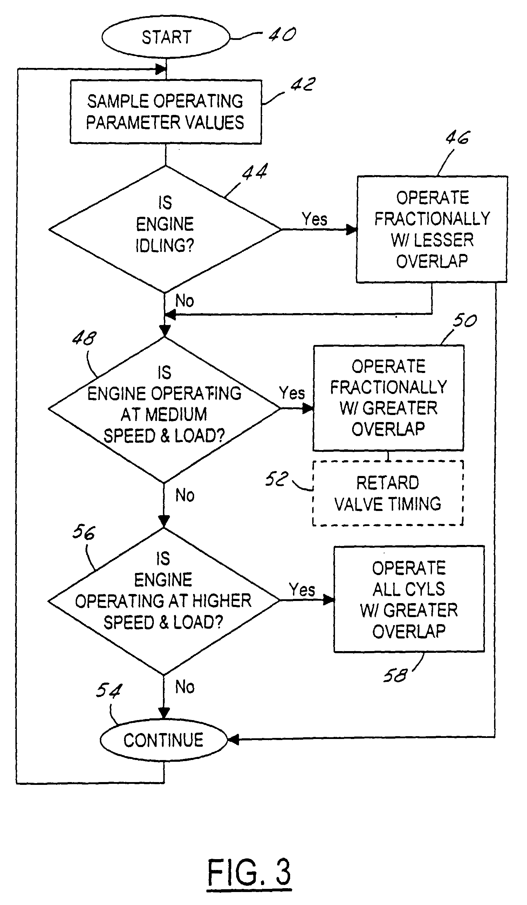

Figure 3 illustrates the function of an engine according to the present invention. Beginning at block 42, controller 20 starts and then samples a plurality of operating parameters at 42. At block 44, the controller decides whether the engine is idling or otherwise operating at lower speed and low power. As used herein, the term "idle" means idle and off-idle, low speed, low power operation.

If the answer to the question at block 44 is yes, controller 20 moves to block 46 where it operates the engine fractionally with lesser valve overlap. This is done as shown in Figure 1 by deactivating valves I₁ and E₁ and by operating valves I₂ and E₂ at a lesser overlap setting, as shown in Figure 4.

If the answer to the question at block 44 is no, controller 20 moves to block 48 wherein a question is asked as to whether the engine is operating at medium speed and load. If the answer is yes, the controller moves to block 50 where the engine is operated fractionally and with greater valve overlap. Optionally, at block 52, the valve timing may be retarded to further enhance NOx control.

If the answer at block 48 is no, controller 20 moves to block 56 wherein it is inquired as to whether the engine is operating at higher speed and load. If the answer is yes, the controller moves to block 58 where the engine is operated with all cylinders and greater valve overlap. If the answer is no at block 56, the controller moves to block 54 and simply continues.

Those skilled in the art will appreciate in view of this disclosure that the criteria for determining whether the engine is operating at medium speed and load and higher speed and load, or indeed in idle region, is contingent upon the individual characteristics of an engine to which the present system is being applied.

Engine speed is conventionally determined by known engine controllers; engine load may easily be inferred from measurements of throttle position, intake manifold pressure, spark timing, the presence of knock, engine temperature, exhaust temperature, and other operating parameters known to those skilled in the art and suggested by this disclosure.

## Claims

1. A multicylinder, reciprocating internal combustion engine, comprising:
a plurality of cylinders, with each having at least one intake valve, at least one exhaust valve, and a piston connected to a common crankshaft (26);
a valve actuation system (24) for operating said intake and exhaust valves such that at least: 1) some of said valves may be selectively disabled, and 2) some of said valves may be selectively operated with either a lesser overlap or a greater overlap;
a plurality of sensors (22) for determining the values of a plurality of engine operating parameters; and
a controller (20) for receiving the outputs of said sensors (22) and for operating the valve actuation system (24), with said controller (20) operating the valve actuation system so as to define at least three states of engine operation characterised by a first state in which at least some of the valves are disabled and other valves are operated at a lesser overlap, a second state in which at least some of the valves are disabled and other valves are operated with a greater overlap, and a third state in which none of the valves are disabled and all of the valves are operated with a greater overlap.

2. An engine according to Claim 1, wherein said valve actuation system comprises a camshaft powered by the engine and timed with respect to the crankshaft by means of a camshaft phaser operated by the controller.

3. An engine according to Claim 1, wherein said valve actuation system comprises intake and exhaust camshafts powered by the engine and timed with respect to the crankshaft, with the timing of said exhaust camshaft with respect to the crankshaft being set by a camshaft phaser operated by the controller.

4. An engine according to Claims 2 or 4, wherein said controller operates the camshaft phaser such that the timing of the exhaust camshaft is retarded at medium engine load and speed and advanced at higher engine speed.

5. An engine according to Claim 1, wherein said engine is operated in said first state when the operating temperature of the engine is less than a predetermined threshold.

6. An engine according to Claim 1, wherein said engine is operated in said first state when the engine is idling.

7. An engine according to Claim 1, wherein said engine is operated in said second state when the engine is at normal operating temperature and medium load and speed are present.

8. An engine according to Claim 1, wherein said engine is operated in said third state when higher load and speed are present.

9. A method of operating a crankshaft-equipped, reciprocating variable displacement engine having camshaft valve drive and camshaft switching capability for at least some of the cylinders, comprising the steps of:
sensing a plurality of engine operating parameters;
operating the engine with at least some of the cylinders disabled at idle speed and load, with others of said cylinders being operated with lesser valve overlap at said idle speed and load;
operating the engine with at least some of the cylinders disabled at medium speed and load, with others of the cylinders being operated with greater valve overlap at said medium speed and load; and
operating the engine with none of the cylinders disabled at higher speed and load, with all of the cylinders being operated with greater valve overlap at said higher speed and load.

10. A multicylinder, reciprocating internal combustion engine, comprising:
a plurality of cylinders, with each having at least one intake valve, at least one exhaust valve, and a piston connected to a common crankshaft;
a valve actuation system for operating said intake and exhaust valves such that at least: 1) some of said valves may be selectively disabled, 2) some of said valves may be selectively operated with either a lesser overlap or a greater overlap; and 3) the timing of some of said valves with respect to the position of the crankshaft may be retarded;
a plurality of sensors for determining the values of a plurality of engine operating parameters; and
a controller for receiving the outputs of said sensors and for operating the valve actuation system, with said controller operating the valve actuation system so as to define at least three states of engine operation characterised by a first state in which at least some of the valves are disabled and other valves are operated at a lesser overlap, a second state in which at least some of the valves are disabled and other valves are operated with a greater overlap and retarded timing, and a third state in which none of the valves are disabled and all of the valves are operated with a greater overlap.
